# EUROPEAN PATENT APPLICATION

(11) **EP 4 571 865 A1**
(43) Date of publication of application: **18.06.2025**
(21) Application number: 23217057.1
(22) Date of filing: 15.12.2023
(51) Int. Cl.: H01M 4/04, H01M 10/04

(54) **SYSTEM FOR PREPARING AN ELECTRODE FOIL IN A MANUFACTURING LINE FOR A MEASUREMENT STEP**

(71) Applicant: CUSTOMCELLS Holding GmbH, 25524 Itzehoe (DE)
(72) Inventor: Kuhn, Peter, 25524 Itzehoe (DE)
(74) Representative: LKGLOBAL Lorenz & Kopf Patentanwalt Attorney at Law PartG mbB

(57) **Abstract**

The invention relates to a system for preparing an electrode foil in a manufacturing line for a measurement step, wherein the electrode foil moves in a conveying direction, the system comprising a spreader roller capable of guiding an electrode foil, wherein the spreader roller is bendable and configured to stretch the electrode foil at least in a local area of the electrode foil in a direction perpendicular to the conveying direction, and a pivot mounted frame, wherein the spreader roller is mounted on the frame, wherein by pivoting the frame, the spreader roller is contactable to the electrode foil.

## Description

### FIELD OF THE DISCLOSURE

The present disclosure relates to a system for preparing an electrode foil in a manufacturing line for a measurement step. The present disclosure further relates to a manufacturing line for electrode foils. The present disclosure further relates to a method of preparing an electrode foil in a manufacturing line for a measurement step.

### BACKGROUND OF THE DISCLOSURE

Energy storage devices, particularly batteries, play a critical role in modern society, powering a wide range of devices from portable electronics to electric vehicles. The increasing demand for portable electronics and in particular electric vehicles has led to a growing need for batteries with higher energy density, longer lifespan, and improved safety. Furthermore, the shift towards renewable energy sources such as solar and wind power has increased the need for energy storage systems, making batteries an essential technology in the transition to a low-carbon economy.

In order to satisfy this growing need for batteries, there is a need to improve battery manufacturing technologies and processes. Electrodes are one of the key components of a battery cell and their manufacturing typically comprises at least one roll-to-roll manufacturing process. Such a manufacturing process may include a step of coating a substrate foil with a coating material, particularly with a slurry, an optional subsequent step of drying the coated slurry on the substrate foil and another subsequent step of applying a pressure on the coated substrate foil in order to adjust the thickness of the coated substrate foil. The thickness distribution of the coated substrate foil does have a critical effect on both further subsequent manufacturing steps as well as the performance of a battery cell comprising electrodes manufactured from the coated substrate foil.

A challenge during the manufacturing of an electrode foil lies lies in tensions in the electrode foil which can occurafter a step of applying a pressure to the electrode foil. When a pressure is applied to an electrode foil, particularly by calendaring the electrode foil, a coated coating portion of the electrode foil gets compacted and thus the electrode foil in the coated coating portion is stretched by the applied pressure. Uncoated portions of the electrode foil, do not experience the same amount of pressure, mostly no pressure at all, during calendaring and thus do not get stretched. Unevenly stretching the electrode foil in this way can create tensions within the electrode foil. Further, compacting the electrode foil in this way increases the stiffness of the electrode foil. These tensions, particularly combined with the increased stiffness of the compacted electrode foil, can lead to an uneven electrode foil, particularly an uneven electrode foil surface, that can make it difficult or even impossible to take measurements of the electrode foil. Such measurements may comprise for example an in-line thickness measurement of the electrode (for determining the thickness in real-time while it is in production), or an optical monitoring of the quality of a coating layer.

Different approaches are known which attempt to avoid the appearance of tensions at all.

For example, CN104143628B describes a method for rolling an electrode material and a rolling equipment, which can easily adjust the extension of an uncoated portion of the electrode material by setting a non-coated area extension mechanism, and can suppress tensions or resulting wrinkles on the electrode material. However, this method simply calendars the non-coated area, and high pressure is applied due to the difficulty of calendaring, but the extension of the foil is limited, and the residual stress of the foil after calendaring is large, which is not conducive to eliminating tensions or resulting wrinkles.

Accordingly, there is the risk that the appearance of tensions cannot be fully avoided.

Further approaches are known, which attempt to address the problem of appearing tensions in the electrode by adapting the measurement method, as e.g. developed in the context of the research project InteKal, cf. e.g. Andreas Mayr, David Schreiner, Benedikt Stumper, Rüdiger Daub, In-line Sensor-based Process Control of the Calendering Process for Lithium-Ion Batteries, Procedia CIRP, Volume 107,2022, Pages 295-301, ISSN 2212-8271, https://doi.orq/10.1016/j.procir.2022.04.048. However, such approaches are rather complex and can imply other technical problems related to the measurement method.

### SUMMARY OF THE DISCLOSURE

Currently, it remains desirable to overcome the aforementioned problems. In particular, it remains desirable to provide a system for preparing an electrode foil in a manufacturing line for a measurement step, so that the accuracy and reliability of the measurement is not negatively affected by an uneven electrode foil or by tensions in the electrode foil, what can occur during the manufacturing process the electrode foil.

Therefore, the present disclosure relates to a system for preparing an electrode foil in a manufacturing line for a measurement step, wherein the electrode foil moves in a conveying direction, the system comprising a spreader roller capable of guiding an electrode foil, wherein the spreader roller is bendable and configured to stretch the electrode foil at least in a local area of the electrode foil in a direction perpendicular to the conveying direction, and a pivot mounted frame, wherein the spreader roller is mounted on the frame, wherein by pivoting the frame, the spreader roller is contactable to the electrode foil.

By providing such a system, tensions in the electrode foil, which can occur during the manufacture of the electrode, particularly after calendaring the electrode foil, can be reduced or completely removed / smoothened out resulting in a smoother electrode foil, particularly a smoother electrode foil surface. Even if this reduction or removal of tensions due to the spreader roller may be limited locally in the manufacturing line, a measurement taken within this limited area can be more accurate and/or reliable.

An electrode foil after calendaring may comprise tensions due to the above described uneven stretching of the electrode foil during calendaring. When an electrode foil is guided by the spreader roller, the electrode foil gets stretched in a direction perpendicular to the conveying direction effectively increasing a width of the electrode foil. In this way, tensions in the electrode foil can be reduced or completely removed, at least in a limited region behind the spreader roller.

The electrode foil may comprise a conductive material, particularly a metal such as copper and/or aluminum and/or any alloy comprising conductive material such as copper and/or aluminum. The electrode foil may be a copper foil and/or an aluminum foil and/or an alloy foil comprising copper and/or aluminum.

The term "foil" may denote a sheet of material that can be wound and unwound. The term "foil" may denote any kind of material sheets or other thin structures like a thin film or a thin layer or a layer assembly. The term "foil" may denote foils having any thickness and shape. The term "foil" may denote, for example, foils having a round or a rectangular shape

The electrode foil may comprise a length extension, a width extension and a thickness extension, wherein the thickness extension is significantly smaller than the length extension and the width extension. The width extension is significantly smaller than the length extension. The length extension of the electrode foil is the extension of the electrode foil in the conveying direction. The width extension of the electrode foil is the extension of the electrode foil in a width direction. The thickness extension of the electrode foil is the extension of the electrode foil in a thickness direction. The width direction is perpendicular to the conveying direction. The thickness direction is perpendicular to the conveying direction and the width direction. Thus, the conveying direction, the width direction and the thickness direction form an orthogonal coordinate system.

The direction perpendicular to the conveying direction may be the width direction.

The electrode foil may be coated with coating material, particularly in at least one coating portion. The electrode foil may be used to provide anodes and/or cathodes for battery cells.

The coating portion of the electrode foil may be used in subsequent electrode manufacturing steps to form part of an active area of an electrode of a battery cell. The coating portion may be arranged on a first side of the electrode foil.

The electrode foil may comprise a second side arranged opposite to the first side.

The local area of the electrode foil may be an edge portion of the electrode foil. Particularly, the spreader roller may be configured to stretch the electrode foil in an edge portion, particularly in two edge portions of the electrode foil.

The edge portions may be uncoated. Particularly, the coating portion of the electrode foil may be arranged between the edge portions of the electrode foil.

The spreader roller may comprise an axle bent along its longitudinal axis on which bearings, particularly ball bearings, and a surface area are mounted thus forming a rotatable roller. Due to this bent axle, foils, particularly electrode foils, being conveyed in conveying direction and guided by the spreader roller may be stretched in width direction. The spreader roller may be arranged, such that the longitudinal axis of the spreader roller is arranged in width direction.

The manufacturing line may be a manufacturing line for electrode foils. The manufacturing line may be a manufacturing line for battery cells.

The measurement step may be an optical measurement step such as a confocal surface measurement step to measure the surface condition of the electrode foil, particularly the surface condition of the coated coating portion of the electrode foil. The measurement step may comprise an in-line thickness measurement of the electrode, such as a confocal surface measurement to measure a thickness and/or a thickness distribution of the electrode foil. The measurement step may be a camera based optical surface measurement to measure the thickness and/or thickness distribution of the electrode foil.

The measurement step may take place after a step of applying pressure to the electrode foil, particularly after a calendaring step of the electrode foil.

The frame may be a frame comprising metal or may be a metal frame.

The frame may be pivotable in relation to a pivot axis. The pivot axis may be arranged in width direction. The pivot axis may be arranged in a conveying plane spanned by the length extension and the width extension of the electrode foil. The conveying plane may be at least partially horizontal, particularly in a conveying path section before and after the system is arranged in a manufacturing line. The pivot axis may be arranged above or below the conveying plane in thickness direction.

The conveying path may be the path an electrode foil is conveyed on through a manufacturing line for electrodes, particularly the path an electrode foil is conveyed during a roll-to-roll process step of the electrode manufacturing.

By pivoting the frame, the spreader roller may be contactable to the electrode foil, such that the spreader roller, particularly a surface of the spreader roller, is in surface contact with the electrode foil, particularly with the first side or the second side of the electrode foil.

By pivoting the frame, the spreader roller may be transferable between a waiting position and a working position. In a waiting position, the spreader roller may not be in contact with the electrode foil. In a working position, the spreader roller may be in contact with the electrode foil.

The spreader roller may be configured to homogeneously stretch the electrode foil at least in the local area of the electrode foil in a direction perpendicular to the conveying direction.

A homogeneously stretched foil may be stretched by the same amount within a stretching plane, particularly within the conveying plane.

Such a system comprises the advantage that tensions in the electrode foil may be reduced more evenly.

The frame may be moveably mounted in a direction orthogonal to the conveying direction.

The direction orthogonal to the conveying direction may be the thickness direction.

The frame may be moveable, particularly automatically moveable by means of an actuator, particularly a hydraulic and/or pneumatic cylinder and/or a servo motor, in thickness direction. The frame may be moveable, such that a relative distance between the frame and the electrode foil may be varied, such that the frame is moved nearer to or away from the electrode foil in thickness direction. Such a system comprises the advantage, that a maximum possible wrapping angle may be adjusted, such that the electrode foil can be stretched further reducing tensions in the electrode foil even further.

The system may be configured to automatically adjust a pivot angle of the frame in relation to a pivot axis of the frame, such that the pivot angle can be selectively set, particularly automatically set.

The frame may be pivotable in clockwise direction and/or in counter-clockwise direction.

For example, when the frame is in a horizontal position, the pivot angle of the frame in relation to the pivot axis may be 0 °. When for example the frame is pivoted in counter-clockwise direction starting from the horizontal position until the frame is in a vertical position, that is a position perpendicular to the horizontal position, the pivot angle may be 90 °. When for example the frame is pivoted in clockwise direction starting from the horizontal position until the frame is in a vertical position, that is a position perpendicular to the horizontal position, the pivot angle may be -90 °.

The pivot angle may be adjusted in an angular range from -360 ° to 360 °.

The system may be configured to automatically adjust a pivot angle of the frame in relation to a pivot axis of the frame, by using an actuator, particularly an electric motor.

The system may be configured to automatically adjust a pivot angle of the frame in relation to a pivot axis of the frame, such that the pivot angle can be steplessly set.

By pivoting the frame, the spreader roller may be contactable to the electrode foil, such that a wrapping angle between 10 ° and 180 ° is settable.

Such a system comprises the advantage that the amount of stretching of the electrode foil can be adjusted. The higher the wrapping angle, the higher the amount of stretching of the electrode foil.

The wrapping angle is the angle the conveyed electrode foil is wrapped around the spreader roller when the spreader roller is in contact with the electrode foil and guiding the electrode foil. In other words, the wrapping angle is the angle, by which the electrode foil encloses the spreader roller in a view on a plane spanned by the conveying direction and the thickness direction.

By pivoting the frame, the spreader roller may be contactable to the electrode foil, such that a wrapping angle greater than or equal to 20 ° and/or greater than or equal to 50 ° and/or greater than or equal to 100 ° and/or greater than or equal to 150 ° is settable.

The spreader roller may comprise an adjustable height of bow, particularly a steplessly adjustable height of bow.

Such a system comprises the advantage that the maximum possible stretching amount of the electrode foil for a given wrapping angle can be increased. The more bent the spreader roller, that is, the greater the height of bow of the spreader roller, the greater the maximum possible stretching amount of the electrode foil for a given wrapping angle.

The height of bow of the spreader roller is the degree of bending of the axle of the spreader roller along its longitudinal axis.

The adjustable height of bow may be mechanically adjustable and/or hydraulically adjustable.

The spreader roller may comprise a steel covered surface and/or a rubber covered surface.

The rubber may comprise an elastomer material.

The system may comprise a deflection roller capable of guiding the electrode foil, wherein the deflection roller is mounted on the frame, wherein by pivoting the frame, the deflection roller is contactable to the electrode foil.

Such a system comprises the advantage, that the stretching of the electrode foil is adjusted to a constant value for a given distance after the deflection roller in conveying direction. In this way, a subsequent measurement step can be performed with an increased accuracy.

The deflection roller may be a rotatable mounted roller, wherein the longitudinal axis of the deflection roller forms the rotation axis. The deflection roller may be mounted such that its longitudinal axis is arranged in width direction.

The deflection roller may be a second spreader roller. Such a system comprises the advantage, that the electrode foil can be stretched even further, such that tensions are reduced even further. Thus, the measurement step can be performed with an increased accuracy.

By pivoting the frame, the spreader roller and the deflection roller may be contactable to the electrode foil, such that a wrapping angle of the spreader roller is substantially the same as a wrapping angle of the deflection roller.

By pivoting the frame, the deflection roller may be contactable to the electrode foil, such that the deflection roller, particularly a surface of the deflection roller, is in surface contact with the electrode foil, particularly with the second side or the first side of the electrode foil.

The frame may be pivotable in clockwise direction and/or in counter-clockwise direction, such that the spreader roller and the deflection roller may each be alternately contactable to both the first side or the second side of the electrode foil.

In a working position, the deflection roller may be arranged behind the spreader roller in the conveying direction.

Alternatively, in a working position, the deflection roller may be arranged before the spreader roller in the conveying direction.

The frame may be a rigid frame, such that a normal distance between the spreader roller and the deflection roller is constant, wherein the normal distance is smaller than or equal to two times the diameter of the spreader roller.

Such a system comprises the advantage, that a higher amount of the stretching of the electrode foil can be kept for an increased distance after the deflection roller in conveying direction. The smaller the distance between the spreader roller and the deflection roller the higher the amount of stretching of the electrode foil, that can be kept in the electrode foil after the deflection roller in the conveying direction. In this way, tensions in the electrode foil can be removed further and for an increased distance after the deflection roller in conveying direction.

The normal distance between the spreader roller and the deflection roller may be a distance, particularly the shortest distance, between the surface of the spreader roller and a surface of the deflection roller. When for example the longitudinal axes of the spreader roller and the deflection roller are arranged in width direction, the normal distance between the spreader roller and the deflection roller is a distance in a plane spanned by the conveying direction and the thickness direction.

The spreader roller and the deflection roller being arranged in the rigid frame do have a non-adjustable normal distance to each other. In other words, the normal distance between the spreader roller and the deflection roller may be constant.

The normal distance may be smaller than or equal to 1.8 times the diameter of the spreader roller, and/or smaller than or equal to 1.5 times the diameter of the spreader roller, and/or smaller than or equal to 1.2 times the diameter of the spreader roller and/or smaller than or equal to the diameter of the spreader roller.

The frame may comprise a pivot axis perpendicular to the conveying direction and arranged between the spreader roller and the deflection roller, wherein the electrode foil is conveyed such that it contacts the spreader roller with a first side of the electrode foil and the deflection roller with a second side, opposite to the first side of the electrode foil.

The pivot axis perpendicular to the conveying direction may be arranged in width direction. The pivot axis may be arranged symmetrically between the spreader roller and the deflection roller. That is, the normal distance between the pivot axis and the spreader roller and between the pivot axis and the deflection roller may be the same.

The electrode foil may be conveyed such that it contacts the spreader roller with a first side of the electrode foil and the deflection roller with a second side, opposite to the first side of the electrode foil, wherein a wrapping angle of the spreader roller and/or a wrapping angle of the deflection roller is greater than 0 °. An electrode foil conveyed in this way may comprise at least one inclined conveying path section. The inclined conveying path section may be arranged between the spreader roller and the deflection roller.

The present disclosure further relates to a manufacturing line for electrode foils, the manufacturing line comprising an above described system, and a measuring device configured to measure at least one quality parameter of the electrode foil in a measuring area in the vicinity of the deflection roller.

By providing such a manufacturing line, tensions in an electrode foil, particularly after calendaring the electrode foil can be reduced or completely removed, at least for a duration of a measurement step.

The measuring device may be and optical measuring device such as a confocal surface measurement device for measuring the surface condition of the electrode foil and/or the thickness and/or the thickness distribution of the electrode foil. The measurement device may be a camera for measuring the thickness and/or thickness distribution of the electrode foil.

The quality parameter may comprise a thickness of the electrode foil and/or a thickness distribution of the electrode foil and/or a surface condition of the electrode foil.

The measuring area may be arranged, such that the first side of the electrode foil can be measured, when the conveyed electrode foil passes through the measuring area.

The measuring area may be arranged before the deflection roller in the conveying direction. The measuring area may be arranged after the deflection roller in the conveying direction.

Particularly the manufacturing line may comprise at least one of: a conveyor system for conveying a substrate foil and/or an electrode foil in a conveying direction, a coating device for applying coating material on the substrate foil and/or on the electrode foil, a pressure application device for applying a pressure to the substrate foil and/or the electrode foil, a slitting device, particularly one or more rolling knives, for slitting the electrode foil being a parent electrode foil into narrower child electrode foils, a winding device for winding the electrode foil to a coil, a drying device, particularly a vacuum drying device such as a vacuum oven, for drying the electrode foil.

The manufacturing line may further comprise a separation unit for separating the electrode foil into electrode sheets. The separation unit may comprise a notching device for preforming the electrode foil into electrode sheets and a laser cutting device for separating the electrode foil, particularly the preformed electrode foil, into electrode sheets. Alternatively, or additionally, the manufacturing line may comprise a tab cutting device for cutting the tabs of the electrode foil.

The manufacturing line may further comprise a stacking unit for stacking the electrode sheets into a cell stack. The stacking unit may comprise one or more robotic arms. Alternatively, or additionally the stacking unit may comprise a z-folding device for stacking the electrodes into a cell stack.

The manufacturing line may comprise a welding unit for welding electrode tabs. The electrode tabs of the electrode sheets may be welded to an anode and/or a cathode current collector tab. The welding unit may comprise an ultrasonic welding device and/or a laser welding device.

The manufacturing line may comprise a packaging device for packaging the electrodes into cell housings and a filling device for filling electrolytes into cell housings

The measuring area may be arranged before and/or after the deflection roller in a conveying direction, such that the quality parameter of the electrode foil can be measured in the stretched local area of the electrode foil.

Alternatively, the measuring area may be arranged on the deflection roller.

The present disclosure further relates to a method of preparing an electrode foil in a manufacturing line for a measurement step, wherein the electrode foil moves in a conveying direction, the method comprising stretching the electrode foil at least in a local area of the electrode foil in a direction perpendicular to the conveying direction, and measuring at least one quality parameter of the electrode foil in a measuring area in the vicinity of the deflection roller.

By providing such a method, tensions in an electrode foil, particularly after calendaring the electrode foil can be reduced or completely removed. In this way, the electrode manufacturing, particularly the calendaring step and subsequent measurements steps, become more reliable and the scrap rate can be reduced.

The above described features and advantages with regard to the system and the manufacturing line described above also apply analogously to this method.

Before stretching the electrode foil, the method may further comprise pivoting a pivot mounted frame, wherein the frame comprises a spreader roller and/or a deflection roller, such that the spreader roller and/or the deflection roller is/are contacted to the electrode foil.

The method may further comprise adjusting a pivot angle of the frame in dependence of the measurement of the at least one quality parameter. The method may further comprise increasing a pivot angle of the frame. The method may further comprise decreasing a pivot angle of the frame.

### BRIEF DESCRIPTION OF THE DRAWINGS

Fig. 1 shows a system for preparing an electrode foil for a measurement step according to a first example of the disclosure in a schematic side view.
Fig. 2 shows the system according to the first example of the disclosure in a first working position in a schematic side view.
Fig. 3 shows the system according to the first example of the disclosure in a second working position in a schematic side view.
Fig. 4 shows a system for preparing an electrode foil for a measurement step according to a second example of the disclosure in a schematic top view.
Fig. 5 shows a manufacturing line for electrode foils comprising a system for preparing an electrode foil for a measurement step according to a third example of the disclosure in a schematic side view.
Fig. 6 shows a method of preparing an electrode foil in a manufacturing line for a measurement step according to a fourth example.

### DESCRIPTION OF THE DRAWINGS

Reference will now be made in detail to embodiments of the disclosure, embodiments of which are illustrated in the accompanying drawings. Wherever possible, the same reference numerals will be used throughout the drawings to refer to the same or like parts. Thus, a description of a part given in relation to one drawing also applies to other drawings, avoiding a repetitive description. Furthermore, individual features described in connection with one embodiment can also be used separately in other embodiments.

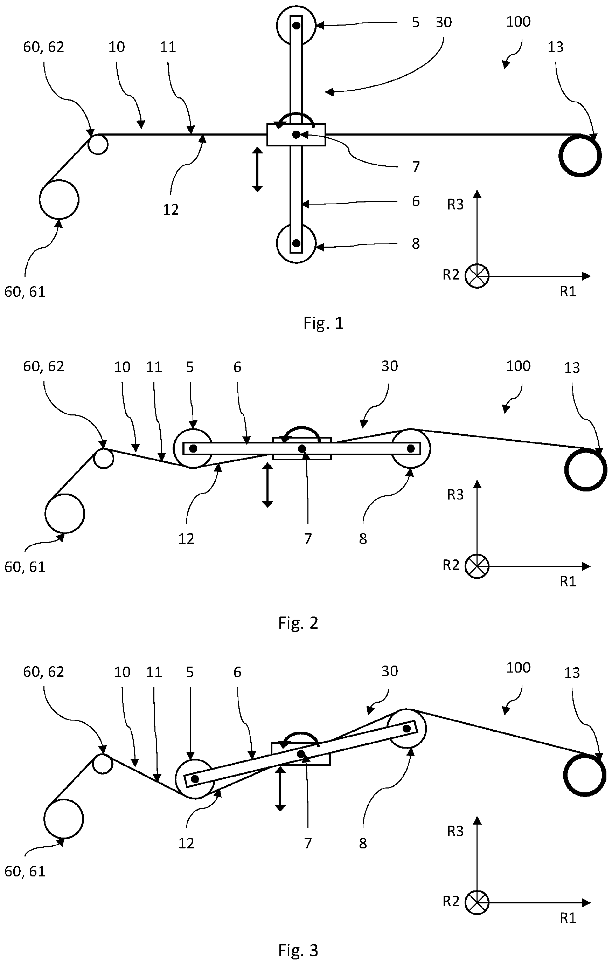

Fig. 1 shows a system 30 for preparing an electrode foil 10 for a measurement step according to a first example of the disclosure in a schematic side view. The system 30 is installed in a manufacturing line 100, wherein the manufacturing line 100 is only displayed schematically in Fig. 1. The system 30 comprises a spreader roller 5 and a deflection roller 8, wherein the spreader roller 5 and the deflection roller 8 are mounted on a pivot mounted frame 6.

The pivot mounted frame 6 is pivotable around a pivot axis 7 which is arranged in width direction R2, wherein the width direction R2 is perpendicular to a conveying direction R1 of the electrode foil 10.

The frame 6 further is movably mounted such that the frame 6 may be moved in a thickness direction R3, wherein the thickness direction R3 is perpendicular to the conveying direction R1 and the width direction R2. By moving the frame 6 in thickness direction R3, a relative distance between the frame 6 and the electrode foil 10 can be varied, such that the frame 6 is moved nearer to or away from the electrode foil 10 in thickness direction R3.

The system 30 is in a waiting position. That is, the frame is pivoted into a position, such that neither the spreader roller 5 nor the deflection roller 8 are in contact with the electrode foil 10. The electrode foil 10 thus may be conveyed by the conveying system 60 of the manufacturing line 100, formed by a first roller 61 and a second roller 62 in conveying direction without being stretched by the spreader roller 5. The electrode foil 10 may get winded up to an electrode coil 13.

Fig. 2 shows the system 30 according to the first example of the disclosure in a first working position in a schematic side view.

The pivot mounted frame 6 is pivoted such that the spreader roller 5 is in surface contact with a first side 11 of the electrode foil 10 and the deflection roller 8 is in surface contact with a second side 12 of the electrode foil 10. A first wrapping angle of the spreader roller 5 and a first wrapping angle of the deflection roller 8 are substantially the same.

The electrode foil 10 being conveyed in conveying direction R1 is stretched by the spreader roller 5 at least in a local area of the electrode foil 10.

Starting from the waiting position of the system 30 in Fig. 1, the frame 6 is pivoted around the pivot axis 7 in counter-clockwise direction by 90 ° to arrive at the first working position in Fig. 2.

Fig. 3 shows the system 30 according to the first example of the disclosure in a second working position in a schematic side view.

Starting from the first working position of the system 30 in Fig. 2, the frame 6 is pivoted around the pivot axis 7 in counter-clockwise direction further to arrive at the second working position in Fig. 2.

In the second working position a second wrapping angle of the spreader roller 5 and a second wrapping angle of the deflection roller 8 are substantially the same. The second wrapping angle of the spreader roller 5 is greater than the first wrapping angle of the spreader roller 5 and the second wrapping angle of the deflection roller 8 is greater than the first wrapping angle of the deflection roller 8.

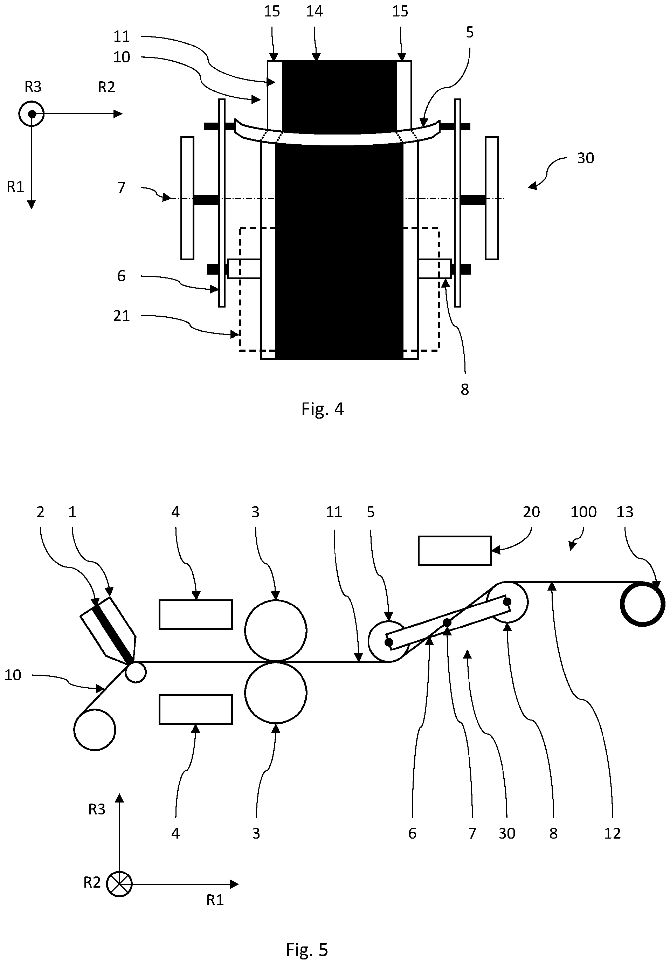

Fig. 4 shows a system 30 for preparing an electrode foil 10 for a measurement step according to a second example of the disclosure in a schematic top view.

The system 30 is in a working position, such that the spreader roller 5 and the deflection roller 8 are in surface contact with the electrode foil 10. The spreader roller is in surface contact with a first side 11 of the electrode foil 10 and the deflection roller 8 is in surface contact with a second side 12 of the electrode 10, wherein the second side is not visible in Fig. 4.

The electrode foil 10 is stretched homogeneously, particularly in width direction, in both edge portions 15 of the electrode foil 10 as well as in a coating portion 14 of the electrode foil 10.

A measuring area 21 of a measuring device 20 not displayed in Fig. 4 is arranged in the vicinity of the deflection roller, particularly before and after the deflection roller 8 in conveying direction.

The second example may be based on or correspond to the first example.

Fig. 5 shows a manufacturing line 100 for electrode foils 10 comprising a system 30 for preparing an electrode foil 10 for a measurement step according to a third example of the disclosure in a schematic side view.

The manufacturing line 100 comprises a conveyor system 60, formed by a first roller 61 and a second roller 62, for conveying the electrode foil 10 in conveying direction R1, a coating device 1 for coating coating material 2 in the coating portion 14 of the first side 11 of the electrode foil 10.

The manufacturing line 100 further comprises a drying device 4, particularly a vacuum drying device 4 such as a vacuum oven, for drying the electrode foil 10. The drying device 4 is arranged after the coating device 1 in conveying direction R1.

The manufacturing line 100 further comprises a pressure application device 3, particularly a calendaring device comprising to calendaring rollers, for applying a pressure to the electrode foil 10. The pressure application device 3 is arranged after the drying device 4 in conveying direction R1.

The manufacturing line 100 further comprises the system 30 and a measuring device 20 configured to measure at least one quality parameter of the electrode foil 10 in the measuring area 21 in the vicinity of the deflection roller 8. The system 30 is arranged after the pressure application device 3 and before the measuring device 20 in conveying direction R1.

The system 30 is in a working position, such that the spreader roller 5 is in surface contact with the first side 11 of the electrode foil 10 and the deflection roller 8 is in surface contact with the second side 12 of the electrode foil. The wrapping angle of the spreader roller 5 and the wrapping angle of the deflection roller 8 are substantially the same and greater than 0 °. The electrode foil 10 is conveyed partially along an inclined conveying path in conveying direction R1, wherein the inclined conveying path section is arranged between the spreader roller 5 and the deflection roller 8.

The electrode foil is winded up to an electrode coil 13.

The third example may be based on or correspond to the first example.

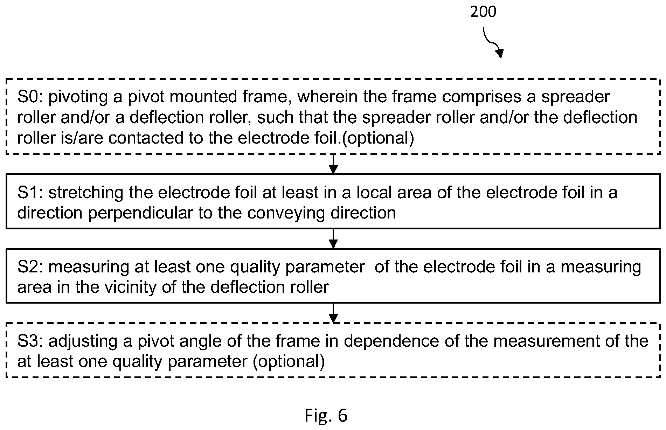

Fig. 6 shows a method 200 of preparing an electrode foil in a manufacturing line for a measurement step according to a fourth example. The method 200 comprises a step S1 of stretching the electrode foil at least in a local area of the electrode foil in a direction perpendicular to the conveying direction and a step S2 of measuring at least one quality parameter of the electrode foil in a measuring area in the vicinity of the deflection roller.

Before the step S1 of stretching the electrode foil, the method 200 may further comprise an optional step S0 of pivoting a pivot mounted frame, wherein the frame comprises a spreader roller and/or a deflection roller, such that the spreader roller and/or the deflection roller is/are contacted to the electrode foil.

The method 200 may further comprise an optional step S3 of adjusting a pivot angle of the frame in dependence of the measurement of the at least one quality parameter.

The fourth example may be based on or correspond to the first example.

### LIST OF REFERENCE NUMERALS

- 1: coating device
- 2: coating material
- 3: pressure application device
- 4: drying device
- 5: spreader roller
- 6: frame
- 7: pivot axis
- 8: deflection roller
- 10: electrode foil
- 11: first side of the electrode foil
- 12: second side of the electrode foil
- 13: electrode coil
- 14: coating portion
- 15: edge portion
- 20: measuring device
- 21: measuring area
- 60: conveying system
- 61: first roller
- 62: second roller

- 100: manufacturing line
- 200: method of preparing an electrode foil in a manufacturing line for a measurement step

- R1: conveying direction
- R2: width direction
- R3: thickness direction

## Claims

1. A system for preparing an electrode foil in a manufacturing line for a measurement step, wherein the electrode foil moves in a conveying direction, the system comprising:
- a spreader roller capable of guiding an electrode foil, wherein the spreader roller is bendable and configured to stretch the electrode foil at least in a local area of the electrode foil in a direction perpendicular to the conveying direction, and
- a pivot mounted frame, wherein the spreader roller is mounted on the frame, wherein by pivoting the frame, the spreader roller is contactable to the electrode foil.

2. The system according to claim 1, wherein the spreader roller is configured to homogeneously stretch the electrode foil at least in the local area of the electrode foil in a direction perpendicular to the conveying direction.

3. The system according to claim 1 or claim 2, wherein the frame is moveably mounted in a direction orthogonal to the conveying direction.

4. The system according to one of the preceding claims, wherein the system is configured to automatically adjust a pivot angle of the frame in relation to a pivot axis of the frame, such that the pivot angle can be selectively set, particularly automatically set.

5. The system according to one of the preceding claims, wherein by pivoting the frame, the spreader roller is contactable to the electrode foil, such that a wrapping angle between 10 ° and 180 ° is settable.

6. The system according to one of the preceding claims, wherein the spreader roller comprises an adjustable height of bow, particularly a steplessly adjustable height of bow.

7. The system according to one of the preceding claims, wherein the spreader roller comprises a steel covered surface and/or a rubber covered surface.

8. The system according to one of the preceding claims, the system comprising a deflection roller capable of guiding the electrode foil, wherein the deflection roller is mounted on the frame, wherein by pivoting the frame, the deflection roller is contactable to the electrode foil.

9. The system according to claim 8, wherein by pivoting the frame, the spreader roller and the deflection roller are contactable to the electrode foil, such that a wrapping angle of the spreader roller is substantially the same as a wrapping angle of the deflection roller.

10. The system according to claim 8 or claim 9, wherein in a working position, the deflection roller is arranged behind the spreader roller in the conveying direction.

11. The system according to one of the claims 8 to 10, wherein the frame is a rigid frame, such that a normal distance between the spreader roller and the deflection roller is constant, wherein the normal distance is smaller than or equal to two times the diameter of the spreader roller.

12. The system according to one of the claims 8 to 11, wherein the frame comprises a pivot axis perpendicular to the conveying direction and arranged between the spreader roller and the deflection roller, wherein the electrode foil is conveyed such that it contacts the spreader roller with a first side of the electrode foil and the deflection roller with a second side, opposite to the first side of the electrode foil.

13. A manufacturing line for electrode foils, the manufacturing line comprising:
- a system according to one of the claims 8 to 12, and
- a measuring device configured to measure at least one quality parameter of the electrode foil in a measuring area in the vicinity of the deflection roller.

14. The manufacturing line for electrode foils according to claim 13, wherein the measuring area is arranged before and/or after the deflection roller in a conveying direction, such that the quality parameter of the electrode foil can be measured in the stretched local area of the electrode foil.

15. A method of preparing an electrode foil in a manufacturing line for a measurement step, wherein the electrode foil moves in a conveying direction, the method comprising:
- stretching the electrode foil at least in a local area of the electrode foil in a direction perpendicular to the conveying direction, and
- measuring at least one quality parameter of the electrode foil in a measuring area in the vicinity of the deflection roller.
